# FASCICULE DE BREVET EUROPEEN

(11) **EP 2 861 479 B1**
(45) Date de publication et mention de la délivrance du brevet: **20.07.2016**
(21) Numéro de dépôt: 13720991.2
(22) Date de dépôt: 11.04.2013
(51) Int. Cl.: B62D 3/12, F16H 55/28

(54) **POUSSOIR À EXCENTRIQUE POUR SYSTÈME DE DIRECTION DE VÉHICULE AUTOMOBILE**
AUSSERMITTIGES JOCH FÜR EIN KRAFTFAHRZEUGLENKSYSTEM
OFF-CENTRE YOKE FOR A MOTOR VEHICLE STEERING SYSTEM

(30) Priorité: 18.06.2012 FR 1255676
(43) Date de publication de la demande: 22.04.2015
(73) Titulaire: JTEKT Europe, 69540 Irigny (FR)
(72) Inventeur: BROCHOT, Patrice, F-69600 Oullins (FR)
(74) Mandataire: Chevalier, Renaud Philippe
(86) Numéro de dépôt international: PCT/FR2013/050791
(87) Numéro de publication internationale: WO 2013/190192

(56) Documents cités:
- WO-A1-2011/048328
- JP-A- 2003 040 116
- JP-A- 2003 170 841

## Description

La présente invention concerne, de façon générale, les systèmes de direction à crémaillère des véhicules automobiles. Plus particulièrement, cette invention s'intéresse au dispositif dit de « poussoir » d'un tel système de direction, dont la fonction est de maintenir la crémaillère en contact d'engrènement avec un pignon de direction, lui-même lié à une colonne de direction, en compensant les défauts des dentures et l'usure de celles-ci. Encore plus particulièrement, l'invention se rapporte à un dispositif de poussoir de type dit « à excentrique », qui est un dispositif à patin rotatif pourvu de moyens de compensation automatique du jeu entre le pignon de direction et la crémaillère.

Dans un système de direction à crémaillère, le pignon de direction est lié en rotation avec la colonne de direction, manoeuvrable à l'aide du volant de conduite du véhicule, et ce pignon vient en prise avec la crémaillère montée coulissante dans un carter de direction de forme allongée. Les deux extrémités de la crémaillère, extérieures au carter, sont accouplées à des biellettes de direction associées respectivement aux roues directrices droite et gauche du véhicule. Ainsi, la rotation du volant dans un sens ou dans l'autre est transmise par la colonne de direction au pignon de direction, et se trouve convertie en une translation correspondante de la crémaillère qui, par l'intermédiaire des biellettes de direction, provoque elle-même l'orientation coordonnée des deux roues directrices du véhicule, pour un « braquage » à droite ou à gauche.

Dans un tel système de direction, le dispositif de poussoir agit élastiquement sur le dos de la crémaillère, dans la région du pignon de direction, pour presser fortement la denture de cette crémaillère contre ledit pignon, ce qui évite tout risque de perte de contact des dentures. Le dispositif de poussoir se présente habituellement comme une « ligne poussoir », avec une pièce mobile formant patin de friction, guidée en translation et sollicitée par des moyens élastiques vers le dos de la crémaillère.

On connaît aussi les dispositifs de poussoir « à excentrique », qui remplacent le concept traditionnel de poussoir « linéaire » par un concept rotatif. Dans un tel dispositif, il est prévu un patin rotatif de forme annulaire ou arquée qui possède une périphérie externe circulaire et une périphérie interne également circulaire mais excentrée par rapport à sa périphérie externe. Le patin rotatif est monté tournant dans le carter de direction, autour d'un axe de rotation parallèle à l'axe longitudinal de la crémaillère. La périphérie interne excentrée de ce patin est appuyée contre le dos de la crémaillère. Le patin rotatif est sollicité en rotation ou positionné angulairement de telle sorte que sa périphérie interne, appliquée contre le dos de la crémaillère, repousse cette dernière vers les dents du pignon de manière à maintenir les dentures en prise.

En particulier, le brevet français FR 2 951 797 ou son équivalent international WO 2011/048328, au nom du Demandeur, décrit un dispositif de poussoir à excentrique, tel que rappelé ci-dessus, dans lequel un mécanisme de compensation de jeu comprend un organe de poussée appuyé sur un bras radial du patin rotatif sous l'effet d'un ressort de compression inséré entre l'organe de poussée et un support fixe du patin, ou un élément solidaire dudit support. Une butée mobile, montée tournante relativement au support ou audit élément, comporte des dentures à dents étagées qui coopèrent avec des crans de l'organe de poussée. La butée mobile est liée par l'intermédiaire d'un ressort de torsion au support ou à l'élément solidaire du support. Ainsi, les crans coopèrent successivement avec les dents étagées des dentures de la butée mobile, de manière à « rattraper » le jeu mécanique dû notamment à l'usure.

Dans la réalisation décrite par les documents précités, le patin rotatif se trouve monté et guidé en rotation sur un support monté lui-même dans le carter de direction. Ce support comporte un berceau de forme arquée, sur lequel prend appui de façon glissante la périphérie externe du patin rotatif.

De façon triviale, le berceau de forme arquée du support, d'une part, et la périphérie externe du patin rotatif, d'autre part, sont l'un et l'autre de forme cylindrique, l'un concave et l'autre convexe. L'inconvénient d'un tel mode de réalisation est qu'en plus du mouvement relatif de glissement entre la périphérie externe du patin et le berceau, il se produit également un mouvement relatif de roulement dû aux jeux de fabrication. Ceci peut conduire à l'apparition de bruit et à une perturbation de la cinématique du mécanisme de compensation de jeu, en particulier lorsque la charge appliquée sur le patin change de direction et d'amplitude.

La présente invention vise à éliminer cet inconvénient, et elle a donc pour but de définir des formes spécifiques et perfectionnées du berceau de forme arquée et/ou de la périphérie externe du patin rotatif, propres à éviter le mouvement de roulement entre ces deux parties du mécanisme, de manière à supprimer le bruit et à améliorer la cinématique du mécanisme.

A cet effet, l'invention a pour objet un dispositif de poussoir à excentrique pour système de direction à crémaillère de véhicule automobile, le dispositif de poussoir comprenant un patin rotatif de forme arquée qui possède une périphérie externe et une périphérie interne excentrée par rapport à la périphérie externe, le patin rotatif étant monté tournant dans un carter de direction autour d'un axe de rotation parallèle à l'axe longitudinal de la crémaillère, la périphérie externe de ce patin étant en appui sur un berceau de forme arquée appartenant à un support monté dans le carter de direction, tandis que sa périphérie interne excentrée est appliquée contre le dos de la crémaillère, de manière à repousser celle-ci vers les dents d'un pignon de direction, ledit patin étant sollicité et/ou positionné en rotation par un mécanisme de compensation de jeu avec moyens à ressort, le dispositif de poussoir à excentrique étant essentiellement caractérisé par le fait que la périphérie externe du patin rotatif d'une part, et le berceau de forme arquée d'autre part, sont en appui l'une sur l'autre suivant deux lignes de contact espacées, parallèles à l'axe de rotation du patin.

Ainsi, l'invention propose de définir les formes arquées de la périphérie externe du patin rotatif et/ou du berceau appartenant au support de ce patin, de telle sorte que le contact entre les deux parties ait lieu suivant deux lignes parallèles, suffisamment espacées l'une de l'autre. Les deux lignes de contact sont judicieusement positionnées, de telle sorte que la direction des efforts s'exerçant entre le patin rotatif et son support soit située entre ces deux lignes de contact. Ainsi, il ne se produit pas de mouvement relatif de roulement entre le patin et le support, en particulier lorsque la charge appliquée sur le patin change de direction et d'amplitude.

Selon un mode de réalisation de l'invention, la périphérie externe du patin rotatif possède une forme cylindrique, de rayon constant, tandis que le berceau de forme arquée, sur lequel ladite périphérie externe vient en appui suivant deux lignes de contact espacées, possède un profil résultant de la succession de plusieurs zones de rayons différents, tangentes les unes aux autres à leurs points de jonction, ce profil étant symétrique par rapport à un axe qui coïncide sensiblement avec l'axe moyen de transfert des efforts entre le patin et son support. De cette façon, le contact se fait suivant deux lignes de contact symétriques par rapport à l'axe de symétrie du profil, lequel représente aussi l'axe moyen de transfert des efforts, le secteur balayé par ces efforts étant compris entre les deux lignes de contact.

De toute façon, l'invention sera mieux comprise à l'aide de la description qui suit, en référence au dessin schématique annexé représentant, à titre d'exemple, une forme d'exécution de ce dispositif de poussoir à excentrique pour système de direction de véhicule automobile :
Figure 1 est une vue extérieure d'une direction assistée électrique équipée du dispositif de poussoir à excentrique objet de la présente invention ;
Figure 2 est une vue en coupe suivant la ligne II-II de figure 1, passant par le dispositif de poussoir à excentrique ;
Figure 3 représente, plus en détail, le sous-ensemble formé par le patin rotatif et par son support, vus en coupe, avec leurs deux lignes de contact ;
Figure 4 illustre un exemple particulier de profil du berceau.

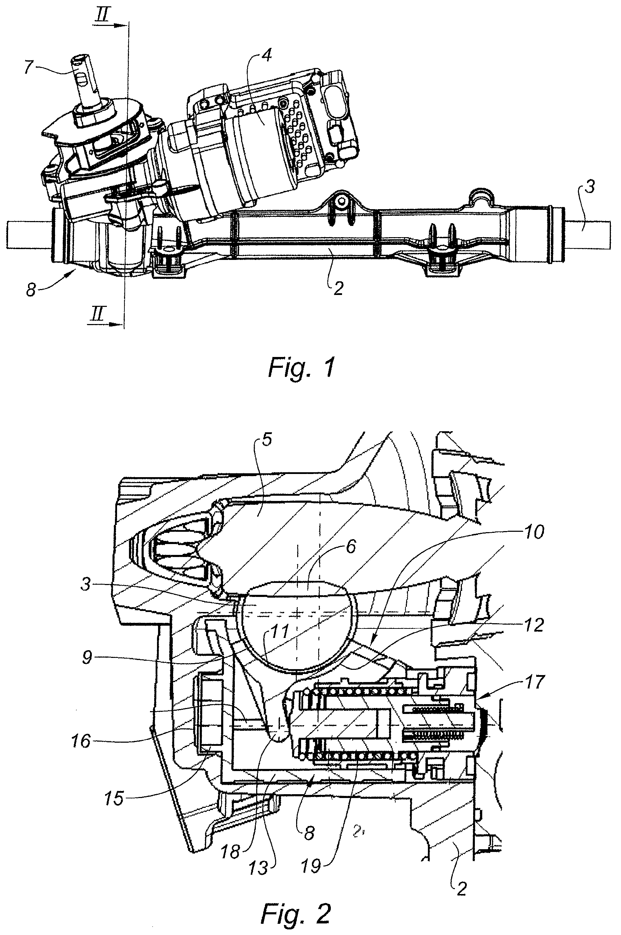

La figure 1 montre une direction assistée électrique de véhicule automobile, avec (dans le cas de cet exemple) une assistance agissant au niveau du pignon de direction. Cette direction comprend un carter de direction 2, qui s'étend suivant un axe longitudinal. Dans le carter de direction 2 est montée coulissante une crémaillère 3, dont les extrémités extérieures au carter 2 sont accouplées à des biellettes de direction (ici non représentées). Un moteur électrique d'assistance 4 est accouplé, par l'intermédiaire d'un réducteur à engrenages, à un pignon de direction 5 qui est en prise avec la denture 6 de la crémaillère 3 (voir aussi figure 2). Le pignon de direction 5 est lié à un arbre d'entrée 6, auquel est accouplée la colonne de direction (non représentée), manoeuvrée à l'aide du volant de conduite du véhicule.

Un dispositif de poussoir, désigné dans son ensemble par le repère 8, est prévu à proximité du pignon de direction 5, pour presser la denture 6 de la crémaillère 3 contre le pignon de direction 5, le dispositif de poussoir 8 étant représenté en détail sur les figures 2 et suivantes.

Le dispositif de poussoir 8 est placé du côté du dos 9 de la crémaillère 3, autrement dit à l'opposé de la denture 6 de cette crémaillère 3 et aussi à l'opposé du pignon de direction 5, ce dispositif de poussoir 8 étant logé dans une partie correspondante du carter de direction 2.

Le dispositif de poussoir 8, du type dit « à excentrique », comprend un patin rotatif 10, qui est une pièce de profil arrondi et, plus particulièrement, une pièce arquée qui possède une forme « en coin ». Le patin rotatif 10 présente une périphérie interne 11 de profil en arc de cercle qui est excentrée par rapport à sa périphérie externe 12, elle aussi de profil en arc de cercle. La périphérie interne 11 excentrée du patin rotatif 10 forme une portée appliquée contre le dos 9 de la crémaillère 3, de manière à repousser la denture 6 de cette crémaillère 3 contre les dents du pignon de direction 5.

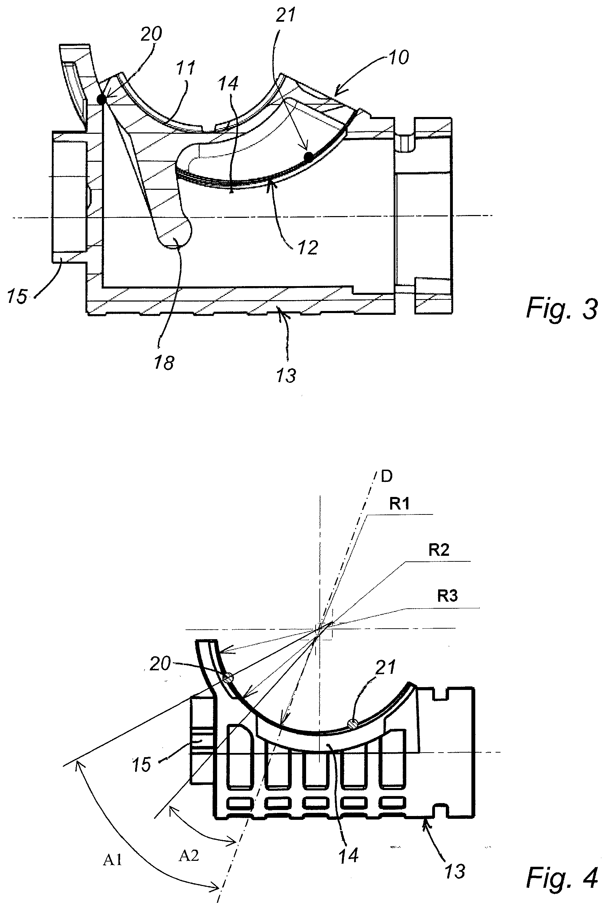

La patin rotatif 10 est monté et guidé sur une pièce de support 13, elle-même montée dans la région concernée du carter de direction 2, la configuration de la pièce de support 13 étant bien visible sur les figures 3 et 4. Cette pièce de support 13 comporte un berceau 14 de forme arquée, sur lequel prend appui de façon glissante la périphérie externe 12 du patin rotatif 10. A une extrémité, la pièce de support 13 présente une excroissance 15 de forme oblongue, engagée dans un évidement correspondant 16 du carter de direction 2 (voir aussi figure 2).

Le patin rotatif 10 est mis en rotation par rapport à la pièce de support 13 par application d'une poussée, exercée par un mécanisme de compensation de jeu 17 sur un bras radial 18 que comporte le patin rotatif 10. Le mécanisme de compensation de jeu 17, visible sur la figure 2, comprend en particulier un ressort de compression 19. Pour le détail de la structure et du fonctionnement de ce mécanisme de compensation de jeu 17, on se référera au brevet français FR 2 951 797 au nom du Demandeur.

Comme le montre la figure 3, la périphérie externe 12 du patin rotatif 10, de profil rigoureusement circulaire c'est-à-dire de rayon R constant, prend appui sur le berceau 14 de la pièce de support 13 suivant seulement deux lignes de contact 20 et 21, parallèles entre elles et espacées l'une de l'autre, les deux lignes de contact 20 et 21 étant aussi parallèles à l'axe longitudinal du carter ainsi qu'à l'axe de rotation du patin rotatif 10.

L'obtention de ces deux lignes de contact 20 et 21 résulte d'une définition particulière de la forme arquée concave du berceau 14 de la pièce de support 13, un exemple de profil de ce berceau 14 étant illustré par la figure 4.

Le profil du berceau 14 de forme arquée est ici symétrique par rapport à un axe D, de direction générale radiale, cet axe de symétrie correspondant à l'axe moyen de transfert des efforts entre le patin rotatif 10 et sa pièce de support 13. De chaque côté de l'axe D, le profil du berceau 14 résulte de la succession de trois zones de rayons différents R1, R2 et R3, ces zones étant tangentes les unes aux autres à leurs points de jonction.

Les valeurs des divers rayons sont choisies de manière à satisfaire à la relation :

R2>R3>R>R1

L'angle A1 (mesuré à partir de l'axe D) qui définit le passage du rayon R2 au rayon R3 est choisi plus grand que la moitié du secteur angulaire balayé par les efforts entre le patin rotatif 10 et sa pièce de support 13. L'angle A2 (mesuré à partir de l'axe D) qui définit le passage du rayon R1 au rayon R2 est arbitrairement fixé à la moitié de l'angle A1, précédemment défini. Les valeurs des rayons R1 et R2 sont ajustées pour obtenir un jeu suffisamment important entre le patin rotatif 10 et la pièce de support 13, de manière à garantir un contact sur deux lignes 20 et 21 quelles que soient les tolérances de fabrication. Ainsi le contact entre la périphérie externe 12 du patin rotatif 10 et le berceau 14, suivant les deux lignes 20 et 21, a lieu aux points de jonction des zones de rayons R1 et R2, de part et d'autre de l'axe D, de telle sorte que le secteur balayé par les efforts soit compris entre ces points. La zone de rayon R3, qui est la plus éloignée de l'axe D, crée un interstice entre le patin rotatif 10 et sa pièce de support 13, évitant tout autre contact au-delà des deux lignes de contact 20 et 21.

Comme il va de soi, l'invention ne se limite pas à la seule forme d'exécution de ce dispositif de poussoir à excentrique qui a été décrite ci-dessus, à titre d'exemple ; elle en embrasse, au contraire, toutes les variantes de réalisation et d'application relevant du même principe. C'est ainsi, notamment, que l'on ne s'écarterait pas du cadre de l'invention :
- en modifiant les formes de détail du patin rotatif et de sa pièce de support, du moment que sont présentes les deux lignes de contact entre ces pièces ;
- en destinant le même dispositif de poussoir à excentrique à des systèmes de direction de tous types : directions manuelles, directions assistées électriques, directions assistées hydrauliques, avec assistance pouvant agir en divers points du système de direction.

## Revendications

1. Dispositif de poussoir à excentrique pour système de direction à crémaillère de véhicule automobile, le dispositif de poussoir comprenant un patin rotatif (10) de forme arquée qui possède une périphérie externe (12) et une périphérie interne (11) excentrée par rapport à la périphérie externe (12), le patin rotatif (10) étant monté tournant dans un carter de direction (2) autour d'un axe de rotation parallèle à l'axe longitudinal de la crémaillère (3), la périphérie externe (12) de ce patin étant en appui sur un berceau (14) de forme arquée appartenant à un support (13) monté dans le carter de direction (2), tandis que sa périphérie interne (11) excentrée est appliquée contre le dos (9) de la crémaillère (3), de manière à repousser celle-ci vers les dents d'un pignon de direction (5), ledit patin étant sollicité et/ou positionné en rotation par un mécanisme de compensation de jeu (17) avec moyens à ressort (19), **caractérisé en ce que** la périphérie externe (12) du patin rotatif (10), d'une part, et le berceau (14) de forme arquée d'autre part, sont en appui l'une sur l'autre suivant deux lignes de contact (20, 21) espacées, parallèles à l'axe de rotation du patin.

2. Dispositif de poussoir à excentrique selon la revendication 1, **caractérisé en ce que** la périphérie externe (12) du patin rotatif (10) possède une forme cylindrique, de rayon (R) constant, tandis que le berceau (14) de forme arquée, sur lequel ladite périphérie externe (12) vient en appui suivant deux lignes de contact (20, 21) espacées, possède un profil résultant de la succession de plusieurs zones de rayons différents (R1, R2, R3), tangentes les unes aux autres à leurs points de jonction, ce profil étant symétrique par rapport à un axe (D) qui coïncide sensiblement avec l'axe moyen de transfert des efforts entre le patin rotatif (10) et son support (13).

3. Dispositif de poussoir à excentrique selon la revendication 2, **caractérisé en ce que**, de chaque côté de l'axe (D), le profil du berceau (14) résulte de la succession de trois zones de rayons différents (R1, R2, R3), satisfaisant à la relation :
R2>R3>R>R1

## Patentansprüche

1. Exzenterschiebervorrichtung für die Zahnstangenlenkung eines Kraftfahrzeugs, wobei die Schiebervorrichtung eine bogenförmige Drehbacke (10) umfasst, die einen äußeren Umfang (12) und einen inneren Umfang (11) besitzt, der im Verhältnis zum äußeren Umfang (12) mittenversetzt ist, wobei die Drehbacke (10) um eine Drehachse parallel zur Längsachse der Zahnstange (3) drehend in einem Lenkungsgehäuse (2) montiert ist, wobei der äußere Umfang (12) dieser Backe auf einem bogenförmigen Träger (14) aufliegt, der zu einer Halterung (13) gehört, die im Lenkungsgehäuse (2) montiert ist, während ihr mittenversetzter innerer Umfang (11) an der Rückseite (9) der Zahnstange (3) anliegt, um diese an die Zähne eines Lenkritzels (5) zu drücken, wobei die besagte Backe durch einen Spielausgleichsmechanismus (17) mit Federmitteln (19) auf Drehung beansprucht und/ oder positioniert wird, **dadurch gekennzeichnet, dass** der äußere Umfang (12) der Drehbacke (10) einerseits, und der bogenförmige Träger (14) andererseits entsprechend zweier im Abstand zueinander befindlichen Kontaktlinien (20, 21) parallel zur Drehachse der Backe aufeinander aufliegen.

2. Exzenterschiebervorrichtung nach Anspruch 1, **dadurch gekennzeichnet, dass** der äußere Umfang (12) der Drehbacke (10) eine zylindrische Form mit einem konstanten Radius (R) besitzt, während der bogenförmige Träger (14), an dem sich der besagte äußere Umfang (12) entsprechend zweier im Abstand zueinander befindlichen Kontaktlinien (20, 21) anlegt, ein Profil besitzt, das aus der Aufeinanderfolge mehrerer Zonen mit unterschiedlichen Radien (R1, R2, R3) hervorgeht, die an ihren Verbindungsstellen aneinander anliegen, wobei dieses Profil im Verhältnis zu einer Achse (D) symmetrisch ist, die in etwa mit der mittleren Kraftübertragungsachse zwischen der Drehbacke (10) und ihrer Halterung (13) übereinstimmt.

3. Exzenterschiebervorrichtung nach Anspruch 2, **dadurch gekennzeichnet, dass** das Profil des Trägers (14) auf jeder Seite der Achse (D) aus der Aufeinanderfolge von drei Zonen mit unterschiedlichen Radien (R1, R2, R3) hervorgeht, der folgenden Gleichung entsprechend:
R2>R3>R>R1

## Claims

1. An eccentric pusher device for a rack steering system of a motor vehicle, the pusher device comprising an arcuate shaped rotating pad (10) which has an outer periphery (12) and an inner periphery (11) eccentric relative to the outer periphery (12), the rotating pad (10) being rotatably mounted in a steering casing (2) about an axis of rotation parallel to the longitudinal axis of the rack (3), the outer periphery (12) of this pad bearing on an arcuate shaped cradle (14) belonging to a support (13) mounted in the steering casing (2), while its eccentric inner periphery (11) is applied against the back (9) of the rack (3), so as to push it back towards the teeth of a steering pinion (5), said pad being biased and/or positioned in rotation by a clearance compensation mechanism (17) with spring means (19), **characterized in that** the outer periphery (12) of the rotating pad (10), on the one hand, and the arcuate shaped cradle (14) on the other hand, are bearing on each other along two contact spaced lines (20, 21), parallel to the axis of rotation of the pad.

2. The eccentric pusher device according to claim 1, **characterized in that** the outer periphery (12) of the rotating pad (10) has a cylindrical shape, of constant radius (R), while the arcuate shaped cradle (14), on which said outer periphery (12) bears along two spaced contact lines (20, 21), has a profile resulting from the succession of several areas of different radii (R1, R2, R3), tangent to each other at their junction points, this profile being symmetrical with respect to an axis (D) which substantially coincides with the average axis of transfer of the forces between the rotating pad (10) and its support (13).

3. The eccentric pusher device according to claim 2, **characterized in that**, on each side of the axis (D), the profile of the cradle (14) results from the succession of three areas of different radii (R1, R2, R3) satisfying the relationship:
R2>R3>R>R1
